# EUROPÄISCHE PATENTSCHRIFT

(11) **EP 3 030 862 B1**
(45) Veröffentlichungstag und Bekanntmachung des Hinweises auf die Patenterteilung: **29.03.2017**
(21) Anmeldenummer: 15778200.4
(22) Anmeldetag: 07.07.2015
(51) Int. Cl.: G01D 3/036

(54) **SCHALTUNG UND VERFAHREN ZUM ANSTEUERN EINES WEGMESSSENSORS**
CIRCUIT ARRANGEMENT AND METHOD FOR CONTROLLING A DISPLACEMENT MEASUREMENT SENSOR
CIRCUIT ET PROCÉDÉ DE COMMANDE D'UN CAPTEUR DE DÉPLACEMENT

(30) Priorität: 15.07.2014 DE 102014213741
(43) Veröffentlichungstag der Anmeldung: 15.06.2016
(73) Patentinhaber: Micro-Epsilon Messtechnik GmbH & Co. KG, 94496 Ortenburg (DE)
(72) Erfinder: HRUBES, Franz, 94094 Rotthalmünster (DE)
(74) Vertreter: Patent- und Rechtsanwälte Ullrich & Naumann
(86) Internationale Anmeldenummer: PCT/DE2015/200403
(87) Internationale Veröffentlichungsnummer: WO 2016/008483

(56) Entgegenhaltungen:
- WO-A1-01/06269
- DE-A1- 3 813 732
- DE-A1- 4 240 739
- DE-A1- 19 803 187
- DE-A1- 19 804 414
- DE-A1- 19 828 055
- US-A- 5 043 661

## Beschreibung

Die Erfindung betrifft eine Schaltung zum Ansteuern eines induktiven Wegmesssensors, wobei der Wegmesssensor eine Sensorspule aufweist, die mittels einer Kapazität zu einem Schwingkreis ergänzt ist, wobei die Schaltung einen Oszillator zum Erzeugen eines Erregersignals aufweist, das den Schwingkreis zu Schwingungen anregt, wobei dem Erregersignal eine Gleichspannung Uₜₑₘₚ überlagert ist und wobei sich die Gleichspannung Uₜₑₘₚ bei einer Temperaturänderung der Sensorspule ändert. Des Weiteren betrifft die Erfindung ein entsprechendes Verfahren.

Induktive Sensoren zur Wegmessung (Abstand, Position, Profil) umfassen mindestens eine Sensorspule. Diese ist bei sehr vielen gebräuchlichen Auswerteschaltungen mit einer Kapazität zu einem LC-Schwingkreis ergänzt. Der Schwingkreis ist durch einen Oszillator über eine Impedanz, meist einen Widerstand und/oder einen Kondensator, mit einem Erregersignal gespeist. Bei Annäherung eines magnetisch und/oder elektrisch leitfähigen Messobjekts (auch als Target bezeichnet) verändern sich die Amplitude und die Phasenlage der Schwingung an der Sensorspule in Relation zu dem Erregersignal. Ist die Schaltung als freischwingender Oszillator aufgebaut, dann ändern sich die Oszillatorfrequenz und die Amplitude. Diese Änderungen werden messtechnisch erfasst, einzeln oder kombiniert verarbeitet, und als Abstandswert ausgegeben.

Jede im Zusammenhang von Wegmesssystemen eingesetzte Sensorspule besitzt einen ohmschen Widerstand, nämlich den Realteil der Spulenimpedanz, und damit eine bestimmte Güte. Der ohmsche Widerstand ist temperaturabhängig. Bei ansteigender Temperatur wird dieser größer. Gleichzeitig verringert sich die Spulengüte, wodurch die Änderung des Sensorsignals über den Abstand reduziert ist. Weiterhin ändern sich bei einer Temperaturänderung auch die Leitfähigkeit und das magnetische Verhalten des Messobjekts, was jedoch - im Vergleich zu der Widerstandsänderung - einen lediglich geringen Einfluss auf das Messsignal hat. Bei großer Temperaturänderung kann sich das Messsignal derart stark ändern, dass es bei konstant gehaltenem Abstand zwischen Sensor und Messobjekt, beispielsweise einem Maximalabstand, eine Abstandsänderung vortäuscht, die den gesamten Messbereich durchläuft. Werden die temperaturbedingten Widerstandsänderungen nicht kompensiert, ist das Messsignal somit in Messsituationen mit starker Temperaturschwankung untauglich zur Abstandsmessung. Dies gilt besonders für Sensoren, die konstruktionsbedingt nur eine geringe Messwertänderung über den Messbereich aufweisen.

Weiterhin sind die bei Serienfertigung von Sensoren stets vorhandenen Fertigungstoleranzen problematisch, da diese zu einem unterschiedlichen Temperaturgang der einzelnen Sensoren führen. Der Temperaturgang beschreibt die Änderung des Messsignals bei Temperaturänderungen und gleichzeitig unverändertem Messabstand zu einem Messobjekt. Außerdem hat die Einbausituation, insbesondere hinsichtlich der Materialeinflüsse in der Messfeldumgebung, einen großen Einfluss auf den Temperaturgang. Aufgrund der voranstehend aufgezeigten Fehlerquellen ist eine Temperaturkompensation erforderlich, um durch Temperaturänderungen ausgelöste Messfehler zu minimieren. Gleichzeitig ist der Aufwand für eine derartige Kompensation des Messwertes enorm. Die Messanordnungen unterscheiden sich regelmäßig in den Abmessungen und im mechanischen Aufbau der Sensorspule, hinsichtlich der die Sensorspule anregenden Oszillatorfrequenz, bezüglich der Kabellänge zu dem Sensor, in Bezug auf das Material des Messobjekts, hinsichtlich Toleranzen, bezüglich der Einbausituation und/oder dem abzudeckenden Temperaturbereich. Je nach Sensor und Messbereich ist der Temperaturgang eines jeweiligen Sensors bei mindestens zwei Messabständen, beispielsweise bei einem geringen und einem großen Messabstand, über den geforderten Temperaturbereich zu ermitteln. Zudem sind entsprechende Korrekturwerte zu errechnen.

Eine Möglichkeit zur Korrektur des Messignals ist in der EP 0 049 304 B1 beschrieben. Das dort offenbarte Verfahren basiert auf dem Einprägen eines Gleichstroms in die Sensorspule. Dadurch wird neben dem ohmschen Widerstand der Sensorspule gleichzeitig der Widerstand eines Verbindungskabels zwischen der Sensorspule und einer Auswerteeinheit erfasst. Problematisch hierbei ist, dass für eine gute Temperaturkompensation des Messsignals der Temperaturgang der Sensorspule, des Verbindungskabels und des Messobjekts übereinstimmen müssen. Eine Anpassung, insbesondere durch Sicherstellung übereinstimmender Temperaturkoeffizienten des Widerstands von Kabel, Sensorspule und Messobjekt, ist mit einem hohen Aufwand verbunden.

Eine Verbesserung ist in der EP 1 377 887 B1 offenbart, bei der eine separate Messung des ohmschen Widerstands des Verbindungskabels erfolgt. Der gemessene ohmsche Widerstand des Verbindungskabels wird zur separaten Kompensation des temperaturbedingten Einflusses des Verbindungskabels auf das Messsignal genutzt. Problematisch ist dennoch, dass die Auswerteeinheit bei einer Kombination mit verschiedenen Sensoren auf einen jeweiligen Sensor individuell angepasst werden muss. Für eine derartige Kalibrierung sind Temperaturschränke und Messmittel erforderlich, die in ihrer Anschaffung kostenintensiv sind. Zudem ist die Kalibrierung sehr zeitaufwändig, wodurch sich die Kosten eines Sensors nicht unerheblich erhöhen.

Dokumente DE4240739A1, DE19828055A1, DE3813732A1, WO01/06269A1, US5043661, DE19804414A1 sowie DE19803187A1 definieren ähnliche Schaltungen zum Ansteuern eines induktiven Wegmesssensors.

Der vorliegenden Erfindung liegt daher die Aufgabe zugrunde, eine Schaltung und ein Verfahren der eingangs genannten Art derart auszugestalten und weiterzubilden, dass eine Messung mit hoher Genauigkeit bei unterschiedlichen Umgebungstemperaturen bei gleichzeitig möglichst geringen Kosten möglich ist.

Erfindungsgemäß wird die voranstehende Aufgabe durch die Merkmale des Anspruchs 1 gelöst. Danach ist die in Rede stehende Schaltung dadurch gekennzeichnet, dass die Sensorspule mit einem steuerbaren Widerstand verbunden ist, dass die Schaltung einen Komparator aufweist, der die Gleichspannung mit einer Referenzspannung vergleicht, und dass der Komparator basierend auf dem Ergebnis des Vergleichs eine Steuerspannung ausgibt, die den steuerbareren Widerstand ansteuert.

Hinsichtlich eines Verfahrens ist die zuvor aufgezeigte Aufgabe durch die Merkmale des Anspruchs 16 gelöst. Danach umfasst das Verfahren die Schritte:
Erzeugen eines Erregersignals durch einen Oszillator,
Überlagern des Erregersignals mit einer Gleichspannung Uₜₑₘₚ, wobei sich die Gleichspannung Uₜₑₘₚ bei einer Temperaturänderung der Sensorspule ändert,
Vergleich der Gleichspannung Uₜₑₘₚ mit einer Referenzspannung durch einen Komparator,
Ansteuern eines steuerbaren Widerstands unter Verwendung des Ergebnisses des Vergleichs.

In erfindungsgemäßer Weise ist zunächst erkannt worden, dass zum Erzielen einer möglichst hohen Genauigkeit der Messung bei unterschiedlichen Temperaturen keine individuelle Kompensation des Temperaturganges eines Sensors notwendig ist. Insbesondere kann auf aufwändige Kalibrierungsmessungen zum Bestimmen des Temperaturganges eines jeden Sensors und/oder auf ein Bestimmen von Korrekturgliedern verzichtet werden. Es ist nämlich erfindungsgemäß erkannt worden, dass durch Bereitstellen eines mit der Sensorspule verbundenen, steuerbaren Widerstands und durch geschickte Ansteuerung desselben auf verschiedene temperaturbedingte Änderungen und Parameterstreuungen reagiert werden kann. Hierzu wird eine dem Erregersignal überlagerte Gleichspannung Uₜₑₘₚ verwendet, die in den Schwingkreis eingekoppelt ist, wobei sich die Gleichspannung Uₜₑₘₚ bei einer Temperaturänderung der Sensorspule ebenfalls ändert. Die Gleichspannung Uₜₑₘₚ wird durch einen Komparator mit einer Referenzspannung verglichen. Aus dem Vergleichsergebnis wird eine Steuerspannung abgeleitet und durch den Komparator ausgegeben, mit der der steuerbare Widerstand angesteuert wird. Wenn sich die Temperatur der Sensorspule und damit deren ohmscher Widerstand und die Gleichspannung Uₜₑₘₚ ändert, kann die derart aufgebaute Regelschleife dazu genutzt werden, die Änderung des ohmschen Widerstands der Sensorspule zu kompensieren oder ihr zumindest entgegenzuwirken.

Dadurch ist es nicht notwendig, die Schaltung individuell an einen bestimmten Sensor anzupassen. Die Schaltung ist aus sich heraus dazu geeignet, die temperaturbedingte Änderung des ohmschen Widerstands unterschiedlicher Sensoren zu kompensieren, die bei einer bestimmten Temperatur aufgrund von Fertigungstoleranzen voneinander abweichende ohmsche Widerstände und Temperaturgänge aufweisen. Folglich sind in die Schaltung unterschiedliche Sensoren einbindbar, ohne dass eine Kalibration der Schaltung vor einer Inbetriebnahme der Schaltung erforderlich ist. Darüber hinaus können temperaturbedingte Änderungen des ohmschen Widerstands des Verbindungskabels sowie unterschiedliche Einbausituationen, insbesondere hinsichtlich der Materialeinflüsse in der Messfeldumgebung, kompensiert werden.

Vorzugsweise ist die Ansteuerung des steuerbaren Widerstands derart ausgebildet, dass bei einer Temperaturänderung der Sensorspule und einer damit einhergehenden Änderung des ohmschen Widerstands der Sensorspule der Gesamtwiderstand aus Sensorspule und steuerbarem Widerstand im Wesentlichen konstant gehalten wird. Auf diese Weise kann die temperaturbedingte Änderung der Güte des Schwingkreises kompensiert werden, so dass sich das Verhalten des Schwingkreises im Wesentlichen nicht ändert.

Prinzipiell können die Sensorspule und der steuerbare Widerstand auf unterschiedliche Weise verschaltet sein. So wäre eine Parallelschaltung denkbar oder es könnte der steuerbare Widerstand als Teil eines Spannungsteilers mit der Sensorspule verbunden sein. In einer bevorzugten Ausgestaltung sind die Sensorspule und der steuerbare Widerstand jedoch in Reihe geschaltet. Hierbei kann der steuerbare Widerstand auf der der Masse zugewandten Seite des Sensors angeordnet sei, d.h. der steuerbare Widerstand ist beispielsweise mit einem Anschluss mit Masse und mit dem anderen Anschluss mit der Sensorspule verbunden. Der steuerbare Widerstand wäre dann mit dem sogenannten "kalten" Ende des Sensors verbunden. Denkbar wäre aber auch, den steuerbaren Widerstand an dem sogenannten "heißen" Ende des Sensors anzuordnen, d.h. der steuerbare Widerstand ist an der Seite der Sensorspule angeordnet, die der Masse abgewandt ist. Die letztere Ausgestaltung hat den Vorteil, dass der Sensor mit einem Anschluss auf Masse liegen und mit dem anderen Anschluss beispielsweise über ein Koaxialkabel angeschlossen werden kann.

Zur Erzeugung einer Gleichspannung Uₜₑₘₚ, deren Amplitude von der Temperatur der Sensorspule abhängt, kann ein Temperatursensor an der Sensorspule angeordnet sein, dessen Messwert in eine steuerbare Gleichspannungsquelle eingegeben wird. Diese steuerbare Gleichspannungsquelle könnte dann die temperaturabhängige Gleichspannung Uₜₑₘₚ ausgeben.

In einer bevorzugten Ausgestaltung ist die Gleichspannung Uₜₑₘₚ jedoch durch Einprägen eines Konstantstroms in den Schwingkreis erzeugt. Der Konstantstrom durchfließt die Sensorspule und den steuerbaren Widerstand. Sofern Sensorspule und steuerbarer Widerstand parallel geschaltet sind, würde sich der Konstantstrom auf die beiden Zweige aufteilen und zwar abhängig von dem jeweiligen Widerstand der Sensorspule und des steuerbaren Widerstands. Bei einer Reihenschaltung von Sensorspule und steuerbarem Widerstand würde der Konstantstrom die beiden Elemente durchfließen. In allen Verschaltungsfällen fällt die Gleichspannung Uₜₑₘₚ über der Sensorspule und dem steuerbaren Widerstand ab. Diese Ausgestaltung hat den Vorteil, dass sich eine Änderung des ohmschen Widerstands der Sensorspule direkt auf die Gleichspannung Uₜₑₘₚ auswirkt. Damit spiegelt sich der Temperaturgang der Sensorspule direkt in der Gleichspannung Uₜₑₘₚ wieder und die Freiheit bei der Auswahl eines geeigneten Sensors steigt damit noch weiter an.

Bei dieser Ausgestaltung der Erfindung ändert sich bei einer temperaturbedingten Änderung des ohmschen Widerstands der Sensorspule die über der Sensorspule und dem steuerbaren Widerstand abfallende Gleichspannung Uₜₑₘₚ. Dadurch ändert sich eine der am Komparator anliegenden Eingangsspannungen, wodurch der von dem Komparator durchgeführte Vergleich ein geändertes Ergebnis erbringt. Auf Basis des neuen Ergebnisses gibt der Komparator eine geänderte Steuerspannung aus, die wiederum den Widerstandswert des steuerbaren Widerstands ändert. Der Zusammenhang zwischen Vergleichsergebnis und zugehöriger Steuerspannung kann relativ frei gewählt werden und hängt von der Implementierung des Komparators ab. So kann beispielsweise der steuerbare Widerstand durch die Änderung der Steuerspannung derart angepasst werden, dass einer Änderung der Gleichspannung Uₜₑₘₚ aufgrund einer Temperaturänderung der Sensorspule entgegengewirkt wird. Dies kann soweit geführt werden, dass die Gleichspannung wieder auf den Wert vor der Temperaturänderung zurückgeführt wird und Uₜₑₘₚ damit konstant oder zumindest weitgehend konstant gehalten wird.

Das mit der Gleichspannung Uₜₑₘₚ überlagerte Erregersignal kann über einen ersten Tiefpass auf den Komparator geschaltet sein. Der erste Tiefpass dient zum Herausfiltern der Wechselspannungsanteile aus dem mit der Gleichspannung Uₜₑₘₚ überlagerten Erregersignal. Die Gleichspannungsanteile des mit der Gleichspannung Uₜₑₘₚ überlagerten Erregersignals verbleiben. Der erste Tiefpass kann ein aktiver analoger Tiefpass sein. Derartige Tiefpässe können Spulen, Kondensatoren und Widerstände sowie aktive Bauelemente, wie beispielsweise Operationsverstärker oder Transistoren, umfassen. Auch denkbar ist es, dass der erste Tiefpass als passiver Tiefpass ausgebildet ist. So kann dieser eine Spule und einen Widerstand aufweisen. In einer bevorzugten Ausgestaltung ist der erste Tiefpass aus einem Widerstand und einem Kondensator gebildet. Diese Ausgestaltung ist sehr kostengünstig und bietet im vorliegenden Fall eine ausreichende Filterwirkung.

Der Komparator kann auf verschiedene Weise gebildet sein. In einer bevorzugten Ausgestaltung ist der Komparator durch eine Operationsverstärkerschaltung ausgebildet, die einen ersten Operationsverstärker umfasst. Diese Ausgestaltung hat den Vorteil, dass präzise Komparatoren zu geringen Kosten aufgebaut werden können und dass zudem das Verhalten des Ausgangssignals durch geeignete Beschaltung relativ frei definiert werden kann. Der Ausgang des ersten Operationsverstärkers kann auf den invertierenden Eingang des ersten Operationsverstärkers über einen Kondensator rückgekoppelt sein, wodurch der Komparator ein integrierendes Verhalten erhält. Es wäre aber auch denkbar - je nach Art des anzusteuernden steuerbaren Widerstands - im Rückkopplungszweig einen Widerstand oder eine andere Impedanz anzuordnen, um eine andere Steuerspannung zu erhalten. Prinzipiell ist unerheblich welche Eingangsspannung in den Komparator auf den invertierenden und den nicht-invertierenden Eingang des ersten Operationsverstärkers geschaltet ist. Vorzugsweise liegt an dem nicht-invertierenden Eingang jedoch das mit der Gleichspannung Uₜₑₘₚ überlagerte Erregersignal an. An dem invertierenden Eingang des ersten Operationsverstärkers liegt die Referenzspannung, insbesondere über einen Widerstand, an.

Der Schwingkreis kann als Parallelschwingkreis ausgebildet sein. Diese Ausgestaltung ist insbesondere dann vorteilhaft, wenn die Gleichspannung Uₜₑₘₚ durch Einprägen eines Konstantstroms in den Schwingkreis erzeugt wird. In diesem Fall ist bereits ein Gleichstrompfad vorhanden und muss nicht gesondert erzeugt werden.

Zum Erzeugen einer Spannung, die als Maß für die Temperatur der Sensorspule ausgegeben werden kann, kann an einem Verbindungspunkt zwischen dem steuerbaren Widerstand und der Sensorspule ein zweiter Tiefpass angeschlossen sein. Der zweite Tiefpass dient dann zum Herausfiltern des Wechselspannungsanteils aus dem mit der Gleichspannung Uₜₑₘₚ überlagerten Erregersignal. Dadurch verbleibt der Gleichspannungsanteil der ein Maß für die Temperatur der Sensorspule ist. Wenn beispielsweise der steuerbare Widerstand in Reihe mit der Sensorspule geschaltet und an dem heißen Ende der Sensorspule angeordnet ist, würde am Ausgang des zweiten Tiefpasses der Gleichspannungsanteil, der über der Sensorspule abfällt, anliegen. Wenn der steuerbare Widerstand mit der Sensorspule in Reihe geschaltet aber am kalten Ende der Sensorspule angeordnet ist, würde am Ausgang des zweiten Tiefpasses ein über dem steuerbaren Widerstand abfallender Gleichspannungsanteil anliegen. In Abhängigkeit der durch die erfindungsgemäße Schaltung realisierten Regelung würde aber auch diese Spannung ein Maß für die Temperatur der Sensorspule liefern.

Der zweite Tiefpass kann wiederum als aktiver oder als passiver Tiefpass ausgebildet sein. In einer bevorzugten Ausgestaltung ist der zweite Tiefpass wiederum aus einem Widerstand und einem Kondensator gebildet. In diesem Fall bedeutet der Begriff "Ausgang des Tiefpasses" der Verbindungspunkt zwischen Widerstand und Kondensator.

Die Spannung Uₜ kann zum Anpassen der Gleichspannung Uₜₑₘₚ oder zum Anpassen der Referenzspannung U_{tref} genutzt werden. Bei Ausgestaltung des Komparators durch eine Operationsverstärkerschaltung kann eine Anpassung der Gleichspannung Uₜₑₘₚ dadurch erfolgen, dass die Spannung Ut auf den nicht-invertierenden Eingang des ersten Operationsverstärkers geschaltet wird. Zum Anpassen der Referenzspannung kann die Spannung Ut in dieser Ausgestaltung auf den invertierenden Eingang des ersten Operationsverstärkers geschaltet sein. Durch beide Varianten ist eine einfache Möglichkeit der Temperaturkompensation des Materialeinflusses des Messobjekts und des Einflusses der temperaturbedingten Änderung der Induktivität der Sensorspule gegeben. Der Erfinder hat festgestellt, dass die erforderliche Änderung üblicherweise sehr gering ist und daher standardmäßig eingestellt werden kann.

Zur Reduzierung der Belastung des Schwingkreises und des zweiten Tiefpasses kann an den Ausgang des zweiten Tiefpasses ein als Spannungsfolger beschalteter zweiter Operationsverstärker geschaltet sein. Spannungsfolger lassen sich besonders einfach mit Operationsverstärkern aufbauen, bei denen der Ausgang des Operationsverstärkers direkt mit dem invertierenden Eingang des Operationsverstärkers verbunden ist und das Eingangssignal auf den nicht-invertierenden Eingang des Operationsverstärkers gelegt ist. Damit nimmt die Ausgangsspannung annähernd den Wert der Spannung am nicht-invertierenden Eingang an, wobei seitens des Schwingkreises ein sehr hochohmiger Eingang gesehen wird und der Schwingkreis dadurch praktisch unbeeinflusst bleibt. Über den zweiten Operationsverstärker kann die Spannung Ut als Messwert für die Temperatur der Sensorspule ausgegeben werden. Alternativ oder zusätzlich kann das Ausgangssignal des zweiten Operationsverstärkers zur Anpassung der Spannung Uₜₑₘₚ oder der Referenzspannung genutzt werden.

Als steuerbarer Widerstand können jegliche Arten von steuerbaren Widerständen Anwendung finden. So können beispielsweise digital einstellbare Potentiometer verwendet werden. In einer besonders bevorzugten Ausführungsform ist der steuerbare Widerstand durch einen Feldeffekttransistor gebildet. Dabei sind Feldeffekttransistoren mit einem niedrigen oder sehr niedrigen ON-Widerstand besonders geeignet, da hierbei insbesondere bei einer Reihenschaltung aus Sensorspule und steuerbarem Widerstand der Gesamtwiderstand über einen relativ weiten Temperaturbereich minimiert und damit die Güte des Schwingkreises maximiert werden kann. Unter ON-Widerstand wird der Drain-Source-Widerstand eines Feldeffekttransistors im vollständig durchgeschalteten Zustand bzw. im Sättigungsbereich verstanden.

Wichtig bei der Wahl eines steuerbaren Widerstands ist, dass dieser in der Lage ist, die Regelvorgaben über einen Arbeitstemperaturbereich zu erfüllen. Wenn beispielsweise der Gesamtwiderstand aus Sensorspule und steuerbarem Widerstand und eventuell weiteren Elementen, wie einem koaxialen Verbindungskabel, konstant gehalten werden soll, muss der steuerbare Widerstand derart einstellbar sein, dass alle temperaturbedingten Änderungen des ohmschen Widerstands, insbesondere des ohmschen Widerstands der Sensorspule, ausgeglichen werden können. Wenn also beispielsweise bei einer Reihenschaltung aus Sensorspule und steuerbarem Widerstand der ohmsche Widerstand der Sensorspule von dem unteren Ende des Temperaturbereichs zu dessen oberen Ende um einen Betrag ΔR ansteigt, so muss der steuerbare Widerstand um diesen Betrag ΔR reduzierbar sein.

Das durch den Oszillator ausgegebene Erregersignal kann über eine Koppelimpedanz auf den Schwingkreis geschaltet werden. In der einfachsten Ausgestaltung ist diese Koppelimpedanz durch einen Widerstand gebildet. Diese Ausgestaltung bietet den Vorteil, dass das Erregersignal unverändert auf den Schwingkreis geschaltet ist. Es wäre aber auch denkbar, die Koppelimpedanz durch einen Kondensator zu implementieren. Die Koppelimpedanz kann auch durch eine Kombination von mindestens einem Widerstand und/oder mindestens einem Kondensator realisiert sein, beispielsweise durch eine Reihen- oder Parallelschaltung eines Widerstands mit einem Kondensator.

Vorzugsweise kommt bei der Schaltung ein Erregersignal zum Einsatz, das eine feste Frequenz und/oder eine feste Amplitude aufweist. Dadurch wird die Auswertung des Messsignals besonders begünstigt. Vorzugweise weist das Erregersignal zudem einen sinusförmigen Verlauf auf.

Vorzugsweise weist die Schaltung einen Messausgang auf, über den ein Messsignal ausgegeben wird, das für die gemessene Größe (Abstand, Position, Profil) repräsentativ ist. Das Messsignal kann über einen Kondensator aus der Schaltung ausgekoppelt werden, wodurch Gleichspannungsanteile herausgefiltert werden. Denkbar ist es auch, dass die Schaltung einen weiteren Spannungsfolger aufweist (wiederum vorzugsweise durch einen entsprechend beschalteten Operationsverstärker gebildet), über den das Messsignal ausgegeben wird. Das an dem Messausgang anliegende Messsignal kann einer Auswerteschaltung zugeführt werden, die das Messsignal geeignet aufbereitet. Denkbar wäre beispielsweise, das Messsignal über einen Phasenkomparator mit dem Erregersignal zu vergleichen. Wenn das Erregersignal eine feste Frequenz aufweist, kann dadurch das Messsignal sehr einfach ausgewertet werden. Weitere Möglichkeiten der Auswertung wären phasenselektive Gleichrichtung oder Frequenz- bzw. Amplitudendemodulation. Diese Aufzählung ist jedoch nicht abschließend, vielmehr können an dieser Stelle viele bekannte Verfahren zur Aufbereitung von Messsignalen eingesetzt werden.

Der Wegmesssensor kann ein nach dem Wirbelstromprinzip arbeitender Sensor sein, mittels dem ein Abstand, eine Position und/oder ein Profil eines Messobjekts bestimmbar sind.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: ein Schaltbild eines ersten Ausführungsbeispiels einer erfindungsgemäßen Schaltung zur Ansteuerung eines Wirbelstromsensors, bei dem der steuerbare Widerstand am "kalten" Ende der Sensorspule angeordnet ist,
- Fig. 2: ein Schaltbild eines zweiten Ausführungsbeispiels einer erfindungsgemäßen Schaltung zur Ansteuerung eines Wirbelstromsensors, bei dem der steuerbare Widerstand am "heißen" Ende der Sensorspule angeordnet ist,
- Fig. 3: ein Schaltbild eines dritten Ausführungsbeispiels einer erfindungsgemäßen Schaltung zur Ansteuerung eines Wirbelstromsensors mit einer Schaltung zum Ausgeben der Spannung Uₜ,
- Fig. 4: ein Schaltbild eines vierten Ausführungsbeispiels einer erfindungsgemäßen Schaltung zur Ansteuerung eines Wirbelstromsensors mit einer Anpassung der Gleichspannung Uₜₑₘₚ durch die Spannung Uₜ und
- Fig. 5: ein Schaltbild eines fünften Ausführungsbeispiels einer erfindungsgemäßen Schaltung zur Ansteuerung eines Wirbelstromsensors mit einem Feldeffekttransistor als steuerbaren Widerstand.

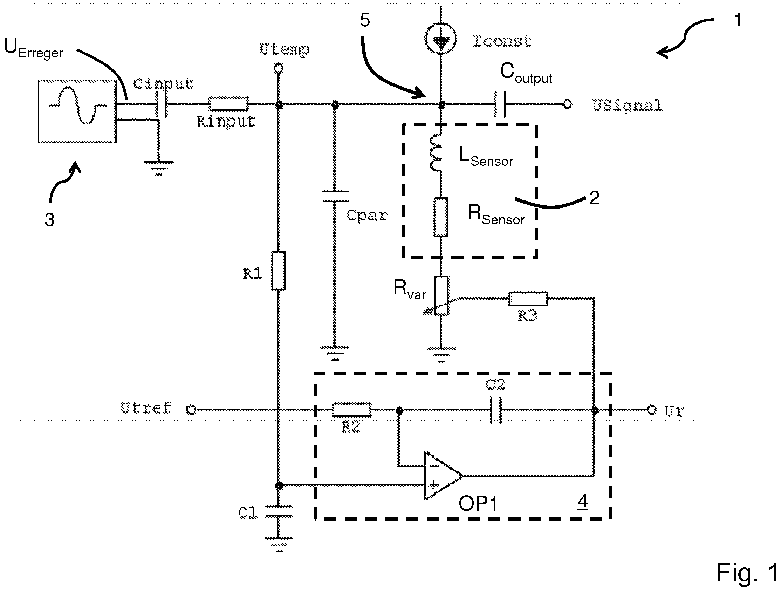

Fig. 1 zeigt ein Schaltbild eines ersten Ausführungsbeispiels einer erfindungsgemäßen Schaltung 1 zum Ansteuern eines Wirbelstromsensors, der eine Sensorspule 2 umfasst. Die Sensorspule 2, die in Fig. 1 als Induktivität Lₛₑₙₛₒᵣ sowie deren Widerstand R_{Sensor} dargestellt ist, ist durch eine parallel zu der Sensorspule 2 geschaltete Kapazität Cₚₐᵣ (auch als Parallelkapazität bezeichnet) zu einem Schwingkreis ergänzt. Die Sensorspule 2 ist mit ihrem sogenannten kalten Ende (in der Figur am unteren Ende) über einen steuerbaren Widerstand Rᵥₐᵣ mit Masse verbunden. Ein Oszillator 3 erzeugt ein Erregersignal U_{Erreger} zum Erregen des Schwingkreises und ist über eine Koppelimpedanz auf den Schwingkreis geschaltet, wobei die Koppelimpedanz durch eine Reihenschaltung aus einer Kapazität Cᵢₙₚᵤₜ und einem Widerstand Rᵢₙₚᵤₜ gebildet ist. Damit speist der Oszillator 3 die Sensorspule 2 an deren sogenannten heißen Ende (in der Figur dem oberen Ende). Zudem ist der Oszillator 3 über die Koppelimpedanz und über einen ersten Tiefpass mit einem Komparator 4 verbunden. Der erste Tiefpass ist durch eine Reihenschaltung aus einem Widerstand R₁ und einem Kondensator C₁ gebildet. Der Komparator 4 ist durch einen ersten Operationsverstärker OP1 implementiert. Der Ausgang des ersten Tiefpasses ist an den nicht-invertierenden Eingang des ersten Operationsverstärkers OP1 angeschlossen. Auf den invertierenden Eingang des ersten Operationsverstärkers OP1 ist über einen Widerstand R₂ eine Referenzspannung Utref geschaltet. Zudem ist auf den invertierenden Eingang des ersten Operationsverstärkers OP1 über einen Kondensator C₂ die am Ausgang des ersten Operationsverstärkers OP1 anliegende Steuerspannung Uᵣ rückgekoppelt. Dadurch erhält der Komparator ein integrierendes Verhalten. Die Steuerspannung Uᵣ steigt bei einer positiven Differenz am Eingang des ersten Operationsverstärkers OP1 und sinkt bei einer negativen Differenz. Der Ausgang des ersten Operationsverstärkers OP1 ist über einen Widerstand R₃ mit dem Steuereingang des steuerbaren Widerstands Rᵥₐᵣ verbunden. Am Verbindungspunkt 5 zwischen Koppelimpedanz und Schwingkreis ist ein Kondensator Cₒᵤₜₚᵤₜ angeschlossen, über den ein Messsignal U_{Signal} ausgekoppelt wird. Das Messsignal U_{Signal} kann einer - nicht eingezeichneten - Auswerteeinheit zugeführt werden.

In den Schwingkreis ist ein Konstantstrom I_{const} eingeprägt. Der Konstantstrom I_{const} durchfließt die Sensorspule 2 und den steuerbaren Widerstand Rᵥₐᵣ, wodurch über der Sensorspule 2 und dem steuerbaren Widerstand Rᵥₐᵣ eine Gleichspannung Uₜₑₘₚ abfällt. Die Gleichspannung Uₜₑₘₚ ist dem Erregersignal U_{Erreger} überlagert. Der erste Tiefpass filtert aus dem mit der Gleichspannung Uₜₑₘₚ überlagerten Erregersignal U_{Erreger} die Wechselspannungsanteile heraus. Dadurch liegen am nicht-invertierenden Eingang des ersten Operationsverstärkers OP1 lediglich die Gleichspannungsanteile und damit im Wesentlichen die Gleichspannung Uₜₑₘₚ (abzüglich eines sehr geringen Spannungsabfalls über dem Widerstand R1) an. Der erste Operationsverstärker OP1 vergleicht die an seinen Eingängen anliegenden Spannungen. Basierend auf dem Ergebnis des Vergleichs wird die am Ausgang des ersten Operationsverstärkers OP1 anliegende Steuerspannung Uᵣ angepasst. Mittels der Steuerspannung Uᵣ wird der steuerbare Widerstand Rᵥₐᵣ über einen Widerstand R₃ angesteuert.

Bei einer temperaturbedingten Änderung des ohmschen Widerstands Rsensor der Sensorspule 2, ändert sich die über der Sensorspule 2 und dem steuerbaren Widerstand Rᵥₐᵣ abfallende Gleichspannung Uₜₑₘₚ. Üblicherweise steigt der Widerstand R_{Sensor} bei einem Temperaturanstieg an, so dass die Gleichspannung Uₜₑₘₚ fällt. Aufgrund einer Änderung der Gleichspannung Uₜₑₘₚ, ändert sich eine der am nicht-invertierenden Eingang des ersten Operationsverstärkers OP1 anliegende Spannung. Dadurch ergibt der Vergleich ein anderes Ergebnis und der erste Operationsverstärker OP1 gibt an seinem Ausgang eine geänderte Steuerspannung Uᵣ aus. Auf Basis der geänderten Steuerspannung Uᵣ wird der steuerbare Widerstand Rᵥₐᵣ derart angepasst, dass der Widerstandswert des steuerbaren Widerstands Rᵥₐᵣ der Widerstandsänderung der Sensorspule entgegenwirkt. Die Schaltung ist dabei so eingestellt, dass der Gesamtwiderstand (Rₛₑₙₛₒᵣ + Rᵥₐᵣ) aus steuerbarem Widerstand Rᵥₐᵣ und ohmschem Widerstand R_{Sensor} der Sensorspule 2 wieder auf den Wert vor der Temperaturänderung zurückgeführt wird. Dadurch wird der Gesamtwiderstand bei Temperaturänderungen konstant gehalten. Auch wenn in der Schaltung nach Fig. 1 der Übersichtlichkeit wegen keine weiteren Elemente, wie Verbindungskabel, Einflüsse eines Targets oder Einflüsse der Einbausituation, eingezeichnet sind, so ist für einen Fachmann zu erkennen, dass die in der erfindungsgemäßen Schaltung realisierte Regelschleife dazu geeignet ist, auch deren temperaturbedingten Änderungen zu kompensieren.

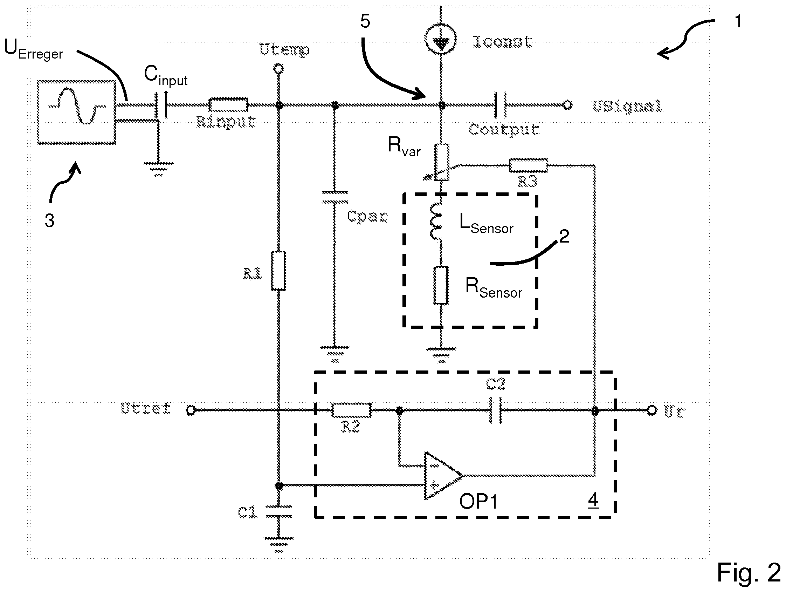

Fig. 2 zeigt im Wesentlichen die Schaltung aus Fig. 1, wobei jedoch im Schwingkreis eine andere Anordnung der Sensorspule 2 und des einstellbaren Widerstands Rᵥₐᵣ realisiert ist. Die Sensorspule 2 liegt in Fig. 2 mit ihrem kalten Ende auf Masse und ist mit dem heißen Ende mit einem Anschluss des steuerbaren Widerstands Rᵥₐᵣ verbunden. Der zweite Anschluss des steuerbaren Widerstands Rᵥₐᵣ ist mit dem Verbindungspunkt 5 verbunden. Die Ausgestaltung nach Fig. 2 hat gegenüber der Ausgestaltung nach Fig. 1 den Vorteil, dass die Sensorspule 2 mit ihrem nicht auf Masse liegenden Anschluss über ein Koaxialkabel oder eine andere Art von Verbindungskabel angeschlossen werden kann.

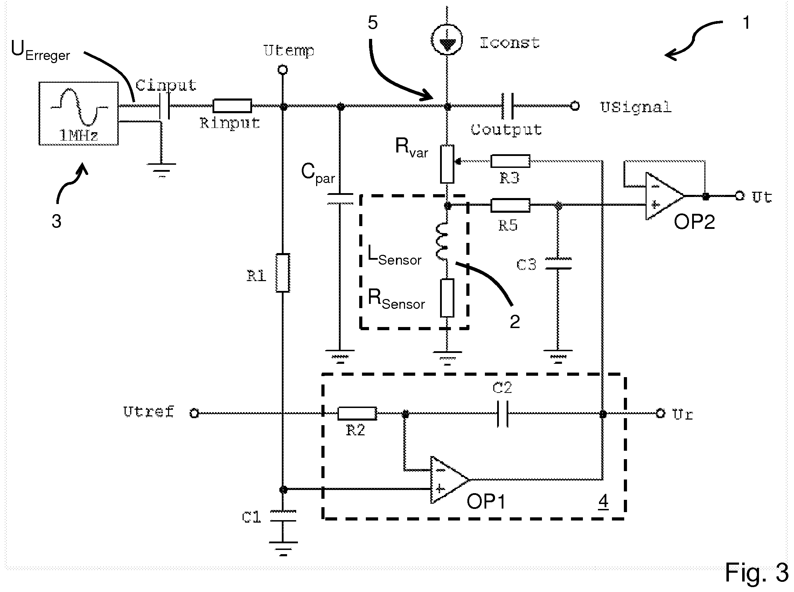

Fig. 3 zeigt eine Weiterentwicklung der Schaltung nach Fig. 2. Zwischen steuerbarem Widerstand Rᵥₐᵣ und Sensorspule 2 ist ein zweiter Tiefpass angeschlossen. Der zweite Tiefpass ist aus einem Widerstand R₅ und einem Kondensator C₃ gebildet, die in Reihe geschaltet sind. Der zweite Tiefpass dient zum Ausfiltern der Wechselspannungsanteile aus dem mit der Gleichspannung Uₜₑₘₚ überlagerten Erregersignal U_{Erreger} und gibt damit die über der Sensorspule 2 abfallende Gleichspannung aus. Am Ausgang des zweiten Tiefpasses, also an dem Verbindungspunkt zwischen Widerstand R₅ und Kondensator C₃, liegt damit eine Spannung Ut an, die ein Maß für die Temperatur der Sensorspule 2 bildet. Der Ausgang des zweiten Tiefpasses ist auf den nicht-invertierenden Eingang eines als Spannungsfolger beschalteten zweiten Operationsverstärkers OP2 geschaltet, d.h. der Ausgang des zweiten Operationsverstärkers OP2 ist zu dessen invertierenden Eingang rückgekoppelt. Durch den Spannungsfolger nimmt die Ausgangsspannung des zweiten Operationsverstärkers OP2 annähernd den Wert der Spannung Ut an, wobei seitens des Schwingkreises ein sehr hochohmiger Eingang gesehen wird, so dass der Schwingkreis praktisch unbeeinflusst bleibt. In dem Ausführungsbeispiel nach Fig. 3 wird die Spannung Ut ausgegeben und in einer nicht eingezeichneten Auswerteeinheit für weitere Kompensationen berücksichtigt.

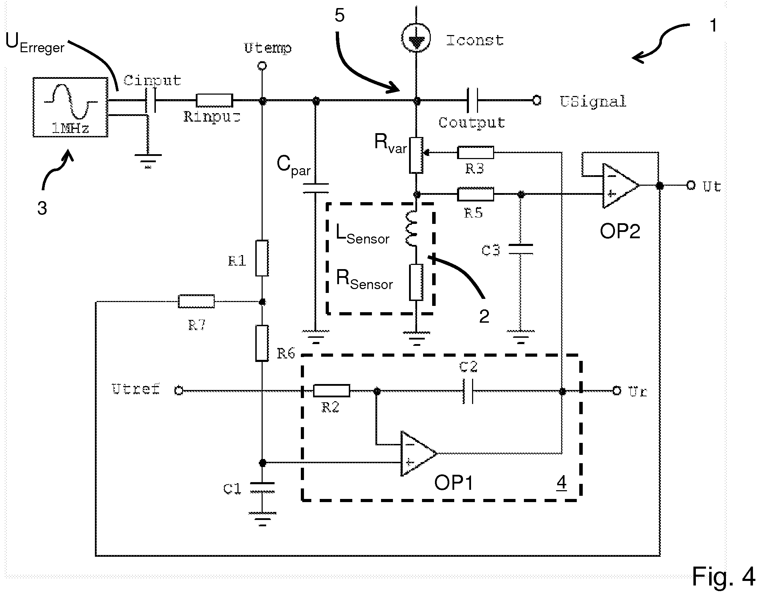

Fig. 4 zeigt eine Fortbildung der Schaltung gemäß Fig. 3. In diesem Ausführungsbeispiel wird die Spannung Uₜ zur Anpassung der Gleichspannung Uₜₑₘₚ herangezogen. Hierzu ist in dem ersten Tiefpass zwischen Widerstand R₁ und dem Kondensator C₁ ein Widerstand R₆ ergänzt und die Spannung Ut über einen Widerstand R₇ an dem Verbindungspunkt zwischen den Widerständen R₁ und R₆ aufgeschaltet. Dadurch wird die Spannung Ut zu der Gleichspannung Uₜₑₘₚ addiert. Dadurch kann die Kompensation von Temperaturänderungen noch weiter verbessert werden.

Zudem können die Steuerspannung Uᵣ und/oder die Spannung Ut entweder für eine zusätzliche Kompensation zum Ausgleich des Materialeinflusses des Messobjekts und/oder zum Ausgleich der Einflüsse der, insbesondere sehr geringen Änderungen der Induktivität der Sensorspule in einer der Schaltung nachfolgenden Auswerteschaltung Anwendung auf das Messsignal finden.

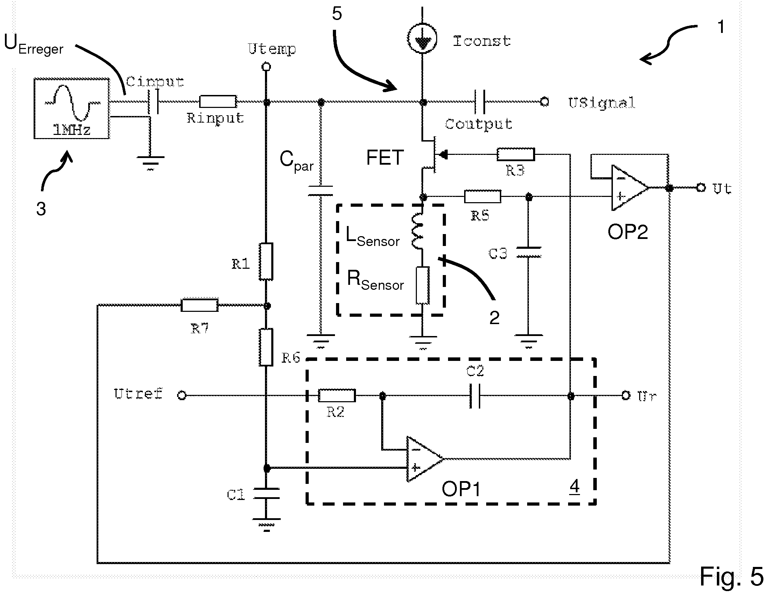

Fig. 5 stellt ein Ausführungsbeispiel dar, bei dem der steuerbare Widerstand Rvar durch einen Feldeffekttransistor gebildet ist. In diesem Ausführungsbeispiel ist der Feldeffekttransistor durch ein n-Kanal Sperrschicht-Feldeffekttransistor FET gebildet. Durch das integrierende Verhalten des Komparators 4 wird die Steuerspannung Uᵣ so lange erhöht, bis der Feldeffekttransistor FET einen Widerstandswert annimmt, der die Schaltung in ein Gleichgewicht bringt. Mit jeder temperaturbedingten Änderung der Widerstandswerte im Schwingkreis ändert sich die Steuerspannung Uᵣ und damit der Widerstand des Feldeffekttransistors FET. Auf diese Weise kann der Gesamtwiderstand in dem Schwingkreis konstant gehalten werden.

Hinsichtlich weiterer vorteilhafter Ausgestaltungen der erfindungsgemäßen Vor-richtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Schaltung lediglich zur Erörterung der beanspruchten Lehre dienen, diese jedoch nicht auf die Ausführungsbeispiele einschränken.

### Bezugszeichenliste

- 1: Schaltung
- 2: Sensorspule
- 3: Oszillator
- 4: Komparator
- 5: Verbindungspunkt

- U_{Erreger}: Erregersignal
- Uₜₑₘₚ: Gleichspannung (dem Erregersignal überlagert)
- U_{tref}: Referenzspannung
- Uᵣ: Steuerspannung
- Uₜ: Spannung (repräsentativ für die Temperatur der Sensorspule)
- U_{Signal}: Messsignal (repräsentativ für den gemessenen Weg oder Abstand)
- I_{const}: Konstantstrom
- Rᵥₐᵣ: Steuerbarer Widerstand
- R_{Sensor}: Ohmscher Widerstand des Sensors
- L_{Sensor}: Sensorinduktivität
- Cₚₐᵣ: Parallelkapazität

## Patentansprüche

1. Schaltung zum Ansteuern eines induktiven Wegmesssensors, wobei der Wegmesssensor eine Sensorspule (2) aufweist, die mittels einer Kapazität (Cₚₐᵣ) zu einem Schwingkreis ergänzt ist,
wobei die Schaltung einen Oszillator (3) zum Erzeugen eines Erregersignals (U_{Erreger}) aufweist, das den Schwingkreis zu Schwingungen anregt,
wobei dem Erregersignal (U_{Erreger}) eine Gleichspannung Uₜₑₘₚ überlagert ist und wobei sich die Gleichspannung Uₜₑₘₚ bei einer Temperaturänderung der Sensorspule (2) ändert,
wobei die Sensorspule (2) mit einem steuerbaren Widerstand (Rᵥₐᵣ) verbunden ist,
die Schaltung (1) einen Komparator (4) aufweist, der die Gleichspannung Uₜₑₘₚ mit einer Referenzspannung (U_{tref}) vergleicht, und
der Komparator (4) basierend auf dem Ergebnis des Vergleichs eine Steuerspannung (Uᵣ) ausgibt, die den steuerbaren Widerstand (Rᵥₐᵣ) ansteuert.

2. Schaltung nach Anspruch 1, **dadurch gekennzeichnet, dass** die Ansteuerung des steuerbaren Widerstands (Rᵥₐᵣ) derart ausgebildet ist, dass bei einer Temperaturänderung der Sensorspule (2) und einer damit einhergehenden Änderung des ohmschen Widerstands (Rₛₑₙₛₒᵣ) der Sensorspule (2) der Gesamtwiderstand aus Sensorspule (Rₛₑₙₛₒᵣ) und steuerbarem Widerstand (Rᵥₐᵣ) im Wesentlichen konstant gehalten wird.

3. Schaltung nach Anspruch 1 oder 2, **dadurch gekennzeichnet, dass** die Sensorspule (2) und der steuerbare Widerstand (Rᵥₐᵣ) in Reihe geschaltet sind.

4. Schaltung nach einem der Ansprüche 1 bis 3, **dadurch gekennzeichnet, dass** die Gleichspannung Uₜₑₘₚ durch Einprägen eines Konstantgleichstroms (I_{const}) in den Schwingkreis erzeugt ist.

5. Schaltung nach einem der Ansprüche 1 bis 4, **dadurch gekennzeichnet, dass** zum Herausfiltern eines Gleichspannungsanteils das mit der Gleichspannung Uₜₑₘₚ überlagerte Erregersignal (U_{Erreger}) über einen ersten Tiefpass auf den Komparator (4) geschaltet ist.

6. Schaltung nach einem der Ansprüche 1 bis 5, **dadurch gekennzeichnet, dass** der Komparator (4) einen ersten Operationsverstärker (OP1) umfasst, wobei vorzugsweise das mit der Gleichspannung Uₜₑₘₚ überlagerte Erregersignal (U_{Erreger}) auf den nicht-invertierenden Eingang des ersten Operationsverstärkers (OP1) und die Referenzspannung (U_{tref}) auf den invertierten Eingang des ersten Operationsverstärkers (OP1) geschaltet ist und wobei vorzugsweise der Ausgang des ersten Operationsverstärkers (OP1) über eine Kapazität (C₂) an den invertierenden Eingang des ersten Operationsverstärkers (OP1) zurückgekoppelt ist.

7. Schaltung nach einem der Ansprüche 1 bis 6, **dadurch gekennzeichnet, dass** der Schwingkreis als Parallelschwingkreis ausgebildet ist.

8. Schaltung nach einem der Ansprüche 1 bis 7, **dadurch gekennzeichnet, dass** an einem Verbindungspunkt zwischen dem steuerbaren Widerstand (Rᵥₐᵣ) und der Sensorspule (2) ein zweiter Tiefpass angeschlossen ist, an dessen Ausgang als Maß für die Temperatur der Sensorspule (2) eine Spannung Uₜ anliegt.

9. Schaltung nach Anspruch 8, **dadurch gekennzeichnet, dass** an den Ausgang des zweiten Tiefpasses ein als Spannungsfolger beschalteter zweiter Operationsverstärker (OP2) geschaltet ist, über den die Spannung Ut ausgebbar ist.

10. Schaltung nach den Ansprüchen 6 und 8 oder 6 und 9, **dadurch gekennzeichnet, dass** die Spannung Ut zum Anpassen der Gleichspannung Uₜₑₘₚ auf den nichtinvertierten Eingang des ersten Operationsverstärkers (OP1) oder zum Anpassen der Referenzspannung (U_{tref}) auf den invertierten Eingang des ersten Operationsverstärkers (OP1) geschaltet ist.

11. Schaltung nach einem der Ansprüche 1 bis 10, **dadurch gekennzeichnet, dass** der steuerbare Widerstand (Rᵥₐᵣ) durch einen Feldeffekttransistor (FET), vorzugsweise einen n-Kanal Sperrschicht-Feldeffekttransistor, gebildet ist.

12. Schaltung nach Anspruch einem der Ansprüche 1 bis 11, **dadurch gekennzeichnet, dass** das Erregersignal (U_{Erreger}) über eine Koppelimpedanz auf den Schwingkreis geschaltet ist, wobei die Koppelimpedanz durch einen Widerstand (Rᵢₙₚᵤₜ) und/oder einen Kondensator (Cₗₙₚᵤₜ) gebildet ist und/oder dass das Erregersignal (U_{Erreger}) eine feste Frequenz und/oder eine feste Amplitude aufweist, wobei das Erregersignal (U_{Erreger}) vorzugsweise einen sinusförmigen Verlauf hat.

13. Schaltung nach einem der Ansprüche 1 bis 12, **dadurch gekennzeichnet, dass** die Schaltung (1) einen Messausgang aufweist, an dem ein für den gemessenen Weg repräsentatives Messsignal (U_{Signal}) ausgegeben wird.

14. Schaltung nach einem der Ansprüche 1 bis 13, **dadurch gekennzeichnet, dass** der Wegmesssensor ein nach dem Wirbelstromprinzip arbeitender Sensor ist, mittels dem ein Abstand, eine Position und/oder ein Profil eines Messobjekts bestimmbar ist.

15. Verfahren zum Ansteuern eines Wegmesssensors, insbesondere unter Verwendung einer Schaltung nach einem der Ansprüche 1 bis 14, wobei der Wegmesssensor eine Sensorspule (2) aufweist, die mittels einer Kapazität (Cₚₐᵣ) zu einem Schwingkreis ergänzt ist, umfassend die Schritte:
Erzeugen eines Erregersignals (U_{Erreger}) durch einen Oszillator (3),
Überlagern des Erregersignals (U_{Erreger}) mit einer Gleichspannung (Utemp), wobei sich die Gleichspannung Uₜₑₘₚ bei einer Temperaturänderung der Sensorspule (2) ändert,
Vergleich der Gleichspannung (Uₜₑₘₚ) mit einer Referenzspannung (U_{tref}) durch einen Komparator (4),
Ansteuern eines steuerbaren Widerstands (Rᵥₐᵣ) unter Verwendung des Ergebnisses des Vergleichs.

## Claims

1. Circuit arrangement for controlling an inductive displacement measurement sensor, wherein the displacement measurement sensor comprises a sensor coil (2), which is supplemented by means of a capacitor (Cₚₐᵣ) to form an oscillating circuit,
wherein the circuit arrangement comprises an oscillator (3) for generating an excitation signal (U_{Erreger}), which excites the oscillating circuit to oscillate,
wherein a DC voltage Uₜₑₘₚ is superimposed on the excitation signal (U_{Erreger}), and wherein the DC voltage Uₜₑₘₚ changes when the temperature of the sensor coil (2) changes,
wherein the sensor coil (2) is connected to a controllable resistor (Rᵥₐᵣ),
wherein the circuit arrangement (1) comprises a comparator (4), which compares the DC voltage Uₜₑₘₚ with a reference voltage (Utref), and
wherein, based on the result of the comparison, the comparator (4) outputs a control voltage (Uᵣ), which controls the controllable resistor (Rᵥₐᵣ).

2. Circuit arrangement according to claim 1, **characterized in that** the control of the controllable resistor (Rᵥₐᵣ) is designed in such a way that when the temperature of the sensor coil (2) changes and, as a result, the ohmic resistance (R_{Sensor}) of the sensor coil (2) also changes, the total resistance consisting of the sensor coil (R_{Sensor}) and the controllable resistor (Rᵥₐᵣ) is held essentially constant.

3. Circuit arrangement according to claim 1 or 2, **characterized in that** the sensor coil (2) and the controllable resistor (Rᵥₐᵣ) are connected in series.

4. Circuit arrangement according to any one of claims 1 to 3, **characterized in that** the DC voltage Uₜₑₘₚ is generated by impressing a constant direct current (I_{const}) into the oscillating circuit.

5. Circuit arrangement according to any one of claims 1 to 4, **characterized in that** in order to filter out a DC voltage component, the excitation signal (U_{Erreger}), which is superimposed with the DC voltage Uₜₑₘₚ, is connected to the comparator (4) by means of a first low-pass filter.

6. Circuit arrangement according to any one of claims 1 to 5, **characterized in that** the comparator (4) comprises a first operational amplifier (OP1), wherein preferably the excitation signal (U_{Erreger}), superimposed with the DC voltage Uₜₑₘₚ, is connected to the non-inverting input of the first operational amplifier (OP1), and the reference voltage (U_{tref}) is connected to the inverted input of the first operational amplifier (OP1), and wherein preferably the output of the first operational amplifier (OP1) is fed back by way of a capacitor (C₂) to the inverting input of the first operational amplifier (OP1).

7. Circuit arrangement according to any one of claims 1 to 6, **characterized in that** the oscillating circuit is designed as a parallel oscillating circuit.

8. Circuit arrangement according to any one of claims 1 to 7, **characterized in that** at a connecting point between the controllable resistor (Rᵥₐᵣ) and the sensor coil (2) a second low-pass is connected, wherein at the output of the second low-pass a voltage Ut is present as a measure for the temperature of the sensor coil (2).

9. Circuit arrangement according to claim 8, **characterized in that** at the output of the second low-pass there is connected a second operational amplifier (OP2), which is wired as a voltage follower and by means of which the voltage Uₜ can be outputted.

10. Circuit arrangement according to claims 6 and 8 or 6 and 9, **characterized in that** in order to adjust the DC voltage Uₜₑₘₚ, the voltage Uₜ is connected to the non-inverted input of the first operational amplifier (OP1) or, in order to adjust the reference voltage (Utref), to the inverted input of the first operational amplifier (OP1).

11. Circuit arrangement according to any one of claims 1 to 10, **characterized in that** the controllable resistor (Rᵥₐᵣ) is formed by a field effect transistor (FET), preferably an n-channel junction field effect transistor.

12. Circuit arrangement according to any one of claims 1 to 11, **characterized in that** the excitation signal (U_{Erreger}) is connected to the oscillating circuit by way of a coupling impedance, wherein the coupling impedance is formed by a resistor (Rᵢₙₚᵤₜ) and/or a capacitor (Cᵢₙₚᵤₜ), and/or **in that** the excitation signal (U_{Erreger}) has a fixed frequency and/or a fixed amplitude, wherein the excitation signal (U_{Erreger}) has preferably a sinusoidal course.

13. Circuit arrangement according to any one of claims 1 to 12, **characterized in that** the circuit (1) comprises a measuring output, at which a measuring signal (U_{Signal}), which is representative of the measured distance, is outputted.

14. Circuit arrangement according to any one of claims 1 to 13, **characterized in that** the displacement measurement sensor is a sensor, which works according to the eddy current principle and by means of which a distance, a position and/or a profile of an object to be measured can be determined.

15. Method for controlling a displacement measurement sensor, in particular, by using a circuit arrangement according to any one of claims 1 to 14, wherein the displacement measurement sensor comprises a sensor coil (2) that is supplemented by means of a capacitor (Cₚₐᵣ) to form an oscillating circuit, said method comprising the steps of:
generating an excitation signal (U_{Erreger}) by means of an oscillator (3),
superimposing the excitation signal (U_{Erreger}) with a DC voltage (Utemp), wherein the DC voltage Uₜₑₘₚ changes when the temperature of the sensor coil (2) changes,
comparing the DC voltage (Utemp) with a reference voltage (Utref) by means of a comparator (4),
controlling a controllable resistor (Rᵥₐᵣ) using the result of the comparison.

## Revendications

1. Circuit pour la commande d'un capteur de mesure de trajet inductif, le capteur de mesure de trajet comprenant une bobine de capteur (2) qui est complété au moyen d'une capacité (Cₚₐᵣ) afin d'obtenir un circuit oscillant,
le circuit comprenant un oscillateur (3) pour la génération d'un signal d'excitation (U_{erreger}) qui excite le circuit oscillant afin d'obtenir des oscillations,
une tension continue Uₜₑₘₚ étant superposée au signal d'excitation (U_{erreger}) et la tension continue Uₜₑₘₚ variant lors d'une variation de température de la bobine de capteur (2),
la bobine de capteur (2) étant reliée à une résistance contrôlable (Rᵥₐᵣ),
le circuit (1) comprenant un comparateur (4) qui compare la tension continue Uₜₑₘₚ avec une tension de référence (U_{tref}) et
le comparateur (4) émet, sur la base du résultat de la comparaison, une tension de commande (Uᵣ) qui commande la résistance contrôlable (Rᵥₐᵣ).

2. Circuit selon la revendication 1, **caractérisé en ce que** la commande de la résistance contrôlable (Rᵥₐᵣ) est conçue de façon à ce que, lors d'une variation de température de la bobine de capteur (2) et d'une variation de la résistance ohmique (R_{Sensor}) de la bobine de capteur (2), la résistance totale, constituée de la bobine de capteur (R_{Sensor}) et de la résistance contrôlable (Rᵥₐᵣ), est maintenue globalement constante.

3. Circuit selon la revendication 1 ou 2, **caractérisé en ce que** la bobine de capteur (2) et la résistance contrôlable (Rᵥₐᵣ) sont branchées en série.

4. Circuit selon l'une des revendications 1 à 3, **caractérisé en ce que** la tension continue Uₜₑₘₚ est générée par l'application d'un courant continu constant (I_{const}) dans le circuit oscillant.

5. Circuit selon l'une des revendications 1 à 4, **caractérisé en ce que**, pour le filtrage d'une part de tension continue, le signal d'excitation (U_{Erreger}) superposé avec la tension continue Uₜₑₘₚ est appliqué, par l'intermédiaire d'un premier filtre passe-bas, au comparateur (4).

6. Circuit selon l'une des revendications 1 à 5, **caractérisé en ce que** le comparateur (4) comprend un premier amplificateur opérationnel (OP1), de préférence le signal d'excitation (U_{Erreger}) superposé avec la tension continue Uₜₑₘₚ étant appliqué à l'entrée non inversante du premier amplificateur opérationnel (OP1) et la tension de référence (U_{tref}) étant appliquée à l'entrée inversée du premier amplificateur opérationnel (OP1) et de préférence la sortie du premier amplificateur opérationnel (OP1) étant couplée en retour à l'entrée inversante du premier amplificateur opérationnel (OP1) par l'intermédiaire d'une capacité (C₂).

7. Circuit selon l'une des revendications 1 à 6, **caractérisé en ce que** le circuit oscillant est conçu comme un circuit oscillant parallèle.

8. Circuit selon l'une des revendications 1 à 7, **caractérisé en ce que**, au niveau d'un point de liaison entre la résistance contrôlable (Rᵥₐᵣ) et la bobine de capteur (2) est branché un filtre passe-bas à la sortie duquel une tension Uₜ est appliquée en tant que mesure de la température de la bobine de capteur (2).

9. Circuit selon la revendication 8, **caractérisé en ce que**, à la sortie du deuxième filtre passe-bas, est branché un deuxième amplificateur opérationnel (OP2) connecté en tant que suiveur de tension, par l'intermédiaire duquel la tension Uₜ peut être émise.

10. Circuit selon l'une des revendications 6 et 8 ou 6 et 9, **caractérisé en ce que** la tension Uₜ est appliquée, pour l'adaptation de la tension continue Uₜₑₘₚ à l'entrée non inversée du premier amplificateur opérationnel (OP1) ou pour l'adaptation de la tension de référence (U_{tref}), à l'entrée inversée du premier amplificateur opérationnel (OP1).

11. Circuit selon l'une des revendications 1 à 10, **caractérisé en ce que** la résistance contrôlable (Rvar) est constituée d'un transistor à effet de champ (FET), de préférence un transistor à effet de champ à jonction à canal n.

12. Circuit selon l'une des revendications 1 à 11, **caractérisé en ce que** le signal d'excitation (U_{Erreger}) est appliqué par l'intermédiaire d'une impédance de couplage au circuit oscillant, l'impédance de couplage étant constituée d'une résistance (Rᵢₙₚᵤₜ) et/ou d'un condensateur (Cᵢₙₚᵤₜ) et/ou **en ce que** le signal d'excitation (U_{Erreger}) présente une fréquence fixe et/ou une amplitude fixe, le signal d'excitation (U_{Erreger}) ayant de préférence une forme sinusoïdale.

13. Circuit selon l'une des revendications 1 à 12, **caractérisé en ce que** le circuit (1) comprend une sortie de mesure au niveau de laquelle un signal de mesure (U_{Signal}) représentatif du trajet mesuré est émis.

14. Circuit selon l'une des revendications 1 à 13, **caractérisé en ce que** le capteur de mesure de trajet est un capteur fonctionnant selon le principe des courants de Foucault, au moyen duquel une distance, une distance et/ou un le profil d'un objet mesuré peut être déterminé.

15. Procédé de commande d'un capteur de mesure de trajet, plus particulièrement à l'aide d'un circuit selon l'une des revendications 1 à 14, le capteur de mesure de trajet comprenant une bobine de capteur (2), qui est complétée d'une capacité (Cₚₐᵣ) afin d'obtenir un circuit oscillant, comprenant les étapes suivantes :
génération d'un signal d'excitation (U_{erreger}) par un oscillateur (3),
superposition du signal d'excitation (U_{erreger}) avec une tension continue (Uₜₑₘₚ), la tension continue Uₜₑₘₚ variant lors d'une variation de température de la bobine de capteur (2),
comparaison de la tension continue (Uₜₑₘₚ) avec une tension de référence (U_{tref}) par un comparateur (4),
commande d'une résistance contrôlable (Rᵥₐᵣ) à l'aide du résultat de la comparaison.
